# EUROPÄISCHE PATENTSCHRIFT

(11) **EP 1 905 683 B1**
(45) Veröffentlichungstag und Bekanntmachung des Hinweises auf die Patenterteilung: **27.07.2011**
(21) Anmeldenummer: 07018616.8
(22) Anmeldetag: 21.09.2007
(51) Int. Cl.: B62K 25/28

(54) **Hinterradschwinge für ein Motorrad**
Rear swing arm for a motorcycle
Bras oscillant de fourche arrière pour motocyclette

(30) Priorität: 27.09.2006 DE 102006045625
(43) Veröffentlichungstag der Anmeldung: 02.04.2008
(73) Patentinhaber: KTM Sportmotorcycle AG, 5230 Mattighofen (AT)
(72) Erfinder: Prielinger, Robert, 4655 Vorchdorf (AT); Seger, Olaf, 83410 Laufen (DE); Wimmer, Andreas, 5274 Burgkirchen (AT)
(74) Vertreter: Söllner, Udo

(56) Entgegenhaltungen:
- JP-A- 2 193 791
- JP-A- 61 215 188
- JP-A- 62 122 887
- US-A1- 2003 010 557

## Beschreibung

Die vorliegende Erfindung betrifft eine Hinterradschwinge für ein Motorrad nach dem Oberbegriff des Anspruchs 1.

Die Hauptfunktion der Hinterradschwinge besteht darin, das Hinterrad des Motorrads mit dem Rahmen zu verbinden und Feder-/Dämpferkräfte in den Rahmen des Motorrads einzuleiten.

In der Praxis wird üblicherweise zwischen so genannten Einarmschwingen und Zweiarmschwingen unterschieden, je nach der Zahl der das Hinterrad führenden Tragarme der Hinterradschwinge oder kurz Schwinge. Die beim Überfahren von Fahrbahnabsätzen oder Bodenwellen oder, wenn das Hinterrad des Motorrads mit der Fahroberfläche nach einem Sprung wieder in Kontakt kommt, die Hinterradschwinge belastenden Vertikalkräfte führen zu hohen Biegebeanspruchungen der Schwinge. Das Biegemoment auf die Schwinge ist insbesondere im Bereich der Federbeinanlenkung hoch. Das Hinterrad des Motorrads baut Seitenführungskräfte auf, die die Schwinge mit Seitenkräften belasten und in der Kurvenfahrt führt die Verlagerung des Reifenaufstandspunkts zu einem die Hinterradschwinge belastenden Torsionsmoment. Die Hinterradschwinge ist also ein hoch belastetes Bauteil beim Motorrad und soll aber, da sie als vertikal oszillierende Masse die Schwerpunktlage des Motorrads und damit das Fahrverhalten beeinflusst, zwar steif, aber leicht ausgebildet sein.

Hinterradschwingen für Motorräder mit zwei Tragarmen sind bereits in vielen Ausführungen bekannt geworden, so beispielsweise als Schweißkonstruktionen mit Stahlrohren oder auch als so genannte gebaute Schwingen, die aus mehreren Bauteilen zusammengesetzt sind, so beispielsweise aus gegossenen Bauteilen, geschmiedeten Bauteilen, Strangpressprofilen oder auch Blechen. Darüber hinaus sind auch bereits Hinterradschwingen bekannt geworden, die mittels eines Gießverfahrens einstückig gefertigt werden, wobei hier bislang hauptsächlich Sandgussverfahren aber auch Gießverfahren mit Dauerformen, wie beispielsweise Kokillengießverfahren verwendet wurden.

Anhand der JP 2193791 A ist eine Hinterradschwinge für ein Motorrad bekannt geworden, die der Kategorie der gebauten Schwingen zuzuordnen ist. Bei dieser bekannten Schwinge werden zwei Schwingen hälften aus einer Legierung gegossen oder mittels Schmiedens hergestellt und anschließend müssen die beiden Schwingenhälften mittels eines Schweißvorgangs zu der Schwinge verbunden werden. Diese bekannte Schwinge weist im Bereich der Schwingenlagerung einen Querträger auf, der aus zwei Querträgerhälften zusammengesetzt ist, die zur Bildung des Querträgers miteinander verschweißt werden. Eine weitere Schweißnaht liegt im Bereich des Querträgers vor, an dem auch eine Anbindung für ein Federbein vorgesehen ist.

Anhand der JP 62122887 A ist eine Hinterradschwinge für ein Motorrad bekannt geworden, die aus zwei Teilen hergestellt wird und bei der die beiden Tragarme jeweils eine obere Tragwand und eine untere Tragwand besitzen.

Anhand der JP 61215188. A ist eine Hinterradschwinge für ein Motorrad bekannt geworden, die zwei Tragarme besitzt, die jeweils drei Tragwände aufweisen, und zwar zwei sich vertikal nach unten gerichtet erstreckende Tragwände und eine obere Tragwand.

Auch ist anhand der EP 0295 799 B1 bereits eine Hinterradschwinge bekannt geworden, die nach einem Druckgießverfahren unter Einsatz einer Aluminiumlegierung gefertigt worden ist.

Diese bekannte Hinterradschwinge besitzt zwei sich in Längsrichtung der Hinterradschwinge erstreckende Tragarme und zwei die Tragarme verbindende Querträger, nämlich im Bereich einer Aufnahme für ein Federbein des Motorrads und im Bereich der beiden Aufnahmen, mit denen die Hinterradschwinge schwenkbar am Motorradrahmen befestigt wird, also den beiden Schwingenlagerdrehpunkten. Die beiden Tragarme der bekannten Hinterradschwinge sind jeweils so ausgebildet, dass eine Querschnittsansicht durch die beiden Tragarme einer einem invertierten U entsprechenden Konfiguration entspricht, also mit zwei seitlichen Tragwänden, die bei einer Einbaulage der bekannten Hinterradschwinge am Motorradrahmen sich in Richtung zur Fahrbahnoberfläche erstrecken, also nach unten gerichtet verlaufen und damit in Richtung einer Aufnahme an der Hinterradschwinge für ein Federbein und einer oberen Tragwand, die die beiden seitlichen Tragwände verbindet und der Federbeinaufnahme gegenüberliegend angeordnet ist, so dass sich durch diese Konfiguration der seitlichen Tragwände und der oberen Tragwand jeweils ein Tragarm einstellt, der einem invertierten U entspricht.

Innerhalb des so gebildeten Hohlraums zwischen den beiden seitlichen Tragwänden und der oberen Tragwand dieser bekannten Hinterradschwinge läuft in jedem Tragarm jeweils eine in Längsrichtung der Hinterradschwinge verlaufende Versteifungrippe vom die beiden Schwingenlagerdrehpunkte der jeweiligen Tragarme verbindenden Querträger aus bis zur Radaufnahme für ein Hinterrad des Motorrads. Das Profil der bekannten Hintemadschwinge zwischen dem Querträger im Bereich der beiden Schwingenlagerdrehpunkte der Tragarme und dem weiteren Querträger ist mit einer Öffnung versehen, der Raum zwischen diesem weiteren, in Längsrichtung der Hinterradschwinge vom Schwingenlagerdrehpunkt aus in Richtung zur. Radaufnahme axial nach hinten versetzten Querträger und dem Querträger zwischen den beiden Schwingenlagerdrehpunkten ist aber in sich geschlossen ausgebildet.

Wird nun ein Motorrad mit dieser bekannten Hinterradschwinge hochdynamischen Fahrvorgängen ausgesetzt, wie beispielsweise Sprüngen an Wellen in der Fahroberfläche mit nachfolgenden entsprechenden Landevorgängen des Motorrads- wie dies beispielsweise bei Geländesportmotorrädern oder auch anderen dynamisch bewegten Motorrädern der Fall ist - oder wird mit dem mit der bekannten Hinterradschwinge versehenen Motorrad eine Fahrbahnunebenheit in der Form beispielsweise eines Absatzes überquert, so führt dies zu starken Biegebeanspruchungen der Hinterradschwinge. Beim Einfedervorgang des Federbeins oder Federdämpferelements wird die bekannte Hinterradschwinge im Bereich der zur Fahroberfläche ausgerichteten unteren Seite der Tragarme mit hohen Zugspannungen belastet. Es bedeutet dies mit anderen Worten, dass die bekannte Hinterradschwinge an dem mit minimaler Werkstoffwandstärke versehenen Querschnitt der Tragarme die höchsten Zugspannungen aufnehmen muss und daher die Gefahr zu Spannungsrissen im insbesondere unteren Bereich der Tragarme besteht, die letztlich zu einem Bruch der Hinterradschwinge führen.

Die bekannte Schwinge wird mittels eines Druckgießverfahrens gefertigt, bei dem ein oberer Formkasten und ein unterer Formkasten verwendet wird und die zum Ausformen der bekannten Hinterradschwinge erforderlichen Formschrägen dazu führen, dass die Wandstärke der seitlichen Tragwände der Tragarme von der oberen Tragwand aus betrachtet in Richtung zum unteren Ende der Tragewände hin abnimmt, die seitlichen Tragwände und die längslaufende Versteifungsrippe also dort die geringste Wandstärke aufweist, wo die höchsten Zugspannungen auftreten.

Zudem weist die bekannte Hinterradschwinge im Bereich der Tragarme an der Oberseite nur die eben ausgebildete obere Tragwand auf, die beim Auftreten hoher Seitenkräfte einem seitlichen Ausknicken der Tragarme nur wenig Widerstand entgegensetzt und darüber hinaus die obere Tragwand der Gefahr des Ausbeulens ausgesetzt ist, wenn die Hinterradschwinge aufgrund hoher vertikaler Kraftkomponenten gebogen wird, so dass die Radaufnahme aus der Ebene der unverformten Lage eine Verlagerungsbewegung in Richtung nach oben erfährt und es somit zum Ausbeulen der oberen Tragwand der beiden Tragarme der bekannten Hinterradschwinge kommt.

Der vorliegenden Erfindung liegt nunmehr die Aufgabe zugrunde, die Hinterradschwinge derart weiterzubilden, dass die genannten Nachteile der Ausbildung von Spannungsrissen im Bereich der hohen Zugspannungen ausgesetzten Bereiche der Hinterradschwinge und die Gefahr des Ausbeulens der oberen Tragwand der Tragarme vermieden werden und darüber hinaus eine torsionssteife Konfiguration der Hinterradschwinge geschaffen wird bei gleichzeitig niedrigem Gewicht der Hinterradschwinge.

Die zur Lösung dieser Aufgabe geschaffene Hinterradschwinge weist die Merkmale nach dem Anspruch 1 auf. Vorteilhafte Ausgestaltungen hiervon sind in den weiteren Ansprüchen beschrieben.

Die Erfindung schafft nunmehr eine Hinterradschwinge für ein Motorrad, mit zwei sich in Längsrichtung erstreckenden Tragarmen mit jeweils drei Tragwänden und einem in Querrichtung verlaufenden und die Tragarme verbindenden Querträger, wobei die Tragarme jeweils eine Aufnahme zur verschwenkbaren Anordnung der Hinterradschwinge an einem Motorradrahmen und im Bereich des den Aufnahmen gegenüberliegenden Endes der Tragarme eine Radaufnahme für ein Hinterrad des Motorrads aufweisen, und die Tragarme in einem Schnitt quer zur Längsrichtung der Hinterradschwinge jeweils eine obere Tragwand sowie eine untere Tragwand und eine die obere und untere Tragwand verbindende und in Längsrichtung der Hinterradschwinge innen liegende Tragwand mit einem zwischen den Tragwänden gebildeten und nach außen offenen Hohlraum besitzen und der Bereich zwischen dem Querträger und den Aufnahmen offen ausgebildet ist und die Hinterradschwinge mittels Druckgießens einstückig gefertigt ist.
Die Erfindung schafft daher eine Hinterradschwinge, die mittels eines Druckgießvorgangs einstückig gefertigt werden kann und die im Bereich zwischen dem Querträger und den Aufnahmen an den Tragarmen zur Anordnung der Hinterradschwinge am Motorradrahmen, also den Drehpunkten für die Schwingenlagerung offen ausgebildet ist und daher zwischen den Aufnahmen keinen Querträger aufweist und daher aufgrund des Wegfalls dieses Querträgers, wie er bei der bekannten Hinterradschwinge vorgesehen ist, eine deutliche Werkstoffersparnis und daher Gewichtsersparnis mit sich bringt. Trotzdem aber besitzt die erfindungsgemäße Hinterradschwinge eine hohe Biegesteifigkeit, Seitensteifigkeit und Torsionssteifigkeit aufgrund der erfindungsgemäßen Ausbildung der Tragarme sowie des Querträgers. Die Tragarme besitzen jeweils drei Tragwände, nämlich eine obere Tragwand, eine untere Tragwand und eine in Längsrichtung der Hinterradschwinge innen liegende Tragwand, die die obere und die untere Tragwand verbindet. Die untere Tragwand, die also bei bestimmungsgemäßer Einbaulage der erfindungsgemäßen Hinterradschwinge am Motorradrahmen der Fahroberfläche oder Fahrbahnoberfläche zugewandt ist, erstreckt sich quer zur Längsrichtung der Hinterradschwinge und nimmt daher die bei hochdynamischen Fahrbewegungen des Motorrads, wie sie vorstehend geschildert worden sind, auftretenden Seitenkräfte und Zugkräfte auf, in einem Bereich also, bei dem die vorstehend beschriebene bekannte Hinterradschwinge zu Spannungsrissen und damit zum Dauerbruch neigt. Zudem werden die auf die Vertikalkräfte zurückzuführenden Biegespannungen von der innen liegenden Tragwand aufgenommen, die einen zentralen Träger ausbildet und einstückig mit der oberen und unteren Tragwand verbunden ist.

Die obere und die untere Tragwand nehmen darüber hinaus Seitenkräfte auf und führen zu einer hohen Seitensteifigkeit der erfindungsgemäßen Hinterradschwinge und verhindern so ein seitliches Ausknicken des zentralen Trägers oder der innen liegenden Tragwand. Die innen liegende Tragwand ist dabei mit der oberen und der unteren Tragwand so verbunden, dass die Tragwände zwischen sich einen einseitig offenen Hohlraum ausbilden und damit der Materialersparnis und damit der Gewichtsreduzierung der erfindungsgemäßen Hinterradschwinge dienen.

Die Tragwände der Tragarme können dabei so miteinander verbunden und jeweils für sich betrachtet konfiguriert sein, dass sie in einem Querschnitt eine C-förmige Konfiguration besitzen, also in Längsrichtung der Hinterradschwinge betrachtet der Hohlraum jeweils seitlich einer gedachten Längsmittelebene der Hinterradschwinge zur Seite gerichtet verläuft und damit nicht, wie bei der bekannten Hinterradschwinge bei einer bestimmungsgemäßen Anordnung der Hinterradschwinge am Motorrad in Richtung zur Fahroberfläche hin ausgerichtet, sondern sich seitlich von der Längsmittelebene der Hinterradschwinge zur Seite hin weg erstreckend.

Wird nun die innen liegende Tragwand für sich alleine betrachtet, also ohne die damit einstückig verbundene obere und untere Tragwand, so besitzt diese innen liegende Tragwand in einem Schnitt quer zur Längsrichtung des Tragarms eine satteldachförmige Konfiguration. Die innen liegende Tragwand weist eine vorbestimmte Wandstärke auf, so dass sie eine innere Tragwandfläche und eine äußere Tragwandfläche ausbildet. In dem angesprochenen Schnitt nun bildet die innere Tragwandfläche einen Innenwinkel von etwa 160 Grad bis etwa 180 Grad aus, so dass je nach dem auf die erfindungsgemäße Hinterradschwinge wirkenden Lastkollektiv eine innen liegende Tragwand vorgesehen ist, die im Querschnitt zwar satteldachförmig ausgebildet ist, sich aber mit in Richtung 180 Grad Innenwinkel zunehmendem Winkel einer nahezu ebenen Tragwand annähert, die aufgrund ihrer bestimmungsgemäßen Konfiguration für eine hohe Längssteifigkeit der erfindungsgemäßen Hinterradschwinge sorgt, also hohen von dem über das Hinterrad auf die Hinterradschwinge eingeleiteten Vertikalkräften und daraus resultierenden Biegespannungsbelastungen gewachsen ist.

Zu diesem Zweck ist es nach einer Weiterbildung der Erfindung vorgesehen, dass die Wandstärke der innen liegenden Tragwand von einer Wandstärke weitgehend im Bereich der Längsmitte, also der Satteldachmitte, der innen liegenden Tragwand aus in Richtung zur oberen und zur unteren Tragwand hin ansteigt. Damit kann die innen liegende Tragwand so ausgebildet sein, dass sie im Bereich ihrer Längsmitte, also der Satteldachmitte eine neutrale Faser ausbildet und die Wandstärke der innen liegenden Tragwand sowohl in Richtung zur oberen Tragwand als auch in Richtung zur unteren Tragwand hin zunimmt und damit dem die Hinterradschwinge beaufschlagenden Lastkollektiv Rechnung getragen wird.

Um diesem Aspekt Rechnung zu tragen, ist es nach einer Weiterbildung der Erfindung auch vorgesehen, dass der Tragarm im Übergangsbereich zwischen der innen liegenden Tragwand und der oberen sowie der unteren Tragwand eine Wandstärke besitzt, die größer ist als in den Bereichen der Tragwände benachbart zum Übergangsbereich. Damit wird die Biegesteifigkeit der Tragarme weiter erhöht, da damit eine Anhäufung des zum Gießen der erfindungsgemäßen Hinterradschwinge verwendeten Werkstoffes dort geschaffen wird, wo sich die Belastungen aus dem Lastkollektiv der erfindungsgemäßen Hinterradschwinge überlagern können, nämlich Biegespannungen resultierend aus die Hinterradschwinge belastenden Vertikalkräften und Biegespannungen resultierend aus den die Hinterradschwinge belastenden vom Hinterrad aufgebauten Seitenführungskräften, die zu Seitenkräften führen, die versuchen, die Hinterradschwinge in Richtung zur Seite zu verbiegen, also aus einer vertikal verlaufenden Längsmittelebene der Hinterradschwinge aus zur Seite.

Die Seitensteifigkeit der Hinterradschwinge wird dabei wesentlich von der oberen und der unteren Tragwand der Tragarme bestimmt und im Übergangsbereich zwischen der innen liegenden Tragwand sowie der oberen und der unteren Tragwand können sich die Biegespannungen aufgrund der Vertikalkräfte und der Seitenkräfte überlagern, so dass durch die erfindungsgemäße Ausbildung des Tragarms im Bereich zwischen der innen liegenden Tragwand und der oberen und unteren Tragwand mit einer Wandstärke, die größer ist, als in den Bereichen der Tragwände benachbart zum Übergangsbereich einerseits eine dem Lastkollektiv gerecht werdende Ausbildung der Hinterradschwinge erreicht wird und andererseits in der dann geringer werdenden Wandstärke der Tragwände benachbart zum Übergangsbereich auch eine Ausbildung, die dem Erfordernis der Hinterradschwinge zur Gewichtsersparnis gerecht wird.

Hierzu ist es nach einer Weiterbildung der Erfindung auch vorgesehen, dass die Wandstärke der oberen und unteren Tragwand von dem, dem Übergangsbereich zwischen der oberen und unteren Tragwand und der innen liegenden Tragwand benachbarten Bereich zum in Längsrichtung der Hinterradschwinge außen liegenden Bereich der unteren und oberen Tragwand wieder abnimmt. Damit wird der Erkenntnis Rechnung getragen, dass es aufgrund des mit größerer Wandstärke ausgebildeten Übergangsbereichs zwischen der innen liegenden Tragwand und der oberen sowie der unteren Tragwand mit entsprechend höherer Steifigkeit nicht mehr erforderlich ist, die Wandstärke der oberen und unteren Tragwand gleich bleibend zu halten, sondern die Wandstärke der oberen und unteren Tragwand zur weiteren Gewichtsreduzierung im außen liegenden Bereich der oberen und unteren Tragwand, also in dem Bereich, der von der vertikal verlaufenden Längsmittelebene der Hinterradschwinge beabstandet ist, kleiner werden zu lassen und somit eine Gewichtsersparnis zu erzielen.

Nach einer Weiterbildung der Erfindung ist es vorgesehen, dass die obere und untere Tragwand jeweils eine Versteifungsrippe besitzt, die sich weitgehend vom Bereich der Aufnahme bis weitgehend zum Bereich der Radaufnahme erstreckt. Damit besitzt sowohl die obere als auch die untere Tragwand eine sich in Längsrichtung des Tragarms erstreckende obere und untere Versteifungsrippe, die sich weitgehend vom Bereich der Aufnahme, also dem Schwingenlagerdrehpunkt bis weitgehend zum Bereich der Radaufnahme erstreckt. Diese Versteifungsrippe kann dabei jeweils an dem der innen liegenden Tragwand gegenüber liegenden Bereich der oberen und unteren Tragwand außerhalb des Hohlraums angeordnet sein und entlang ihrer Längserstreckung einen Bereich zunehmender und einen Bereich abnehmender Höhe besitzen.

Die Versteifungsrippen der unteren und oberen Tragwand verlaufen daher jeweils außerhalb des von den Tragwänden gebildeten Hohlraums des Tragarms und können so konfiguriert sein, dass ihre Höhe vom Bereich der Aufnahme des Tragarms aus in Richtung der Radaufnahme stetig oder unstetig zunimmt und dann in Richtung der Radaufnahme wieder abnimmt. Die an der oberen und unteren Tragwand ausgebildete Versteifungsrippe dient dabei der Erhöhung der Seitensteifigkeit und verhindert ein seitliches Ausknicken der oberen und unteren Tragwand des jeweiligen Tragarms.

Nach einer Weiterbildung der Erfindung ist es vorgesehen, dass sich die innen liegende Tragwand zwischen den beiden Tragarmen entlang eines den Aufnahmen zugewandten Bereichs des Querträgers erstreckt und eine Vorderwand des Querträgers ausbildet. Damit schafft die innen liegende Tragwand im Bereich zwischen den Schwingenlageraufnahmen der Tragarme und des Querträgers eine biegesteife Konfiguration.

In ähnlicher Weise wird eine biegesteife Konfiguration der Hinterradschwinge in dem Bereich zwischen dem Querträger und der Radaufnahme der Tragarme dadurch geschaffen, dass sich die innen liegende Tragwand zwischen den beiden Tragarmen entlang eines den Aufnahmen gegenüber liegenden Bereichs des Querträgers erstreckt und eine Rückwand des Querträgers ausbildet.

Wie es vorstehend bereits erläutert worden ist, besitzt jeder Tragarm im Bereich zwischen den Tragwänden einen Hohlraum, der dafür sorgt, dass das Eigengewicht der erfindungsgemäßen Hinterradschwinge niedrig gehalten werden kann. Um nun sowohl die Längssteifigkeit als auch die Seitensteifigkeit der Tragarme und damit der Hinterradschwinge weiter zu erhöhen, sind nach der Erfindung im Hohlraum jedes Tragarms unterschiedliche Versteifungsrippen vorgesehen.

So ist es nach einer Weiterbildung der Erfindung vorgesehen, dass der Tragarm in dem Hohlraum zwischen der Aufnahme und dem Querträger mindestens eine erste Versteifungsrippe besitzt, die sich von der oberen Tragwand zur unteren Tragwand erstreckt. Diese Versteifungsrippe beugt einem Ausknicken der oberen Tragwand im Bereich zwischen der Aufnahme und dem Querträger vor, die zur Bildung von Welligkeit in der oberen Tragwand führen könnte. In ähnlicher Weise ist im Hohlraum zwischen der Aufnahme und dem Querträger mindestens eine zweite Versteifungsrippe vorgesehen, die sich von der oberen Tragwand bis zur Aufnahme erstreckt und dabei aber nicht in einen Eckbereich des Hohlraums zwischen der Aufnahme und dem Querträger, sondern an einem die Aufnahme des Tragarms ausbildenden Gussauge angebunden ist.

In ähnlicher Weise ist es vorgesehen, dass der Tragarm in dem Hohlraum im Bereich des Querträger mindestens eine dritte Versteifungsrippe besitzt, die sich von der oberen Tragwand zur unteren Tragwand erstreckt und im Bereich des Querträgers der Erhöhung der Torsionssteifigkeit des Querträgers und damit der Hinterradschwinge dient. Auch im Bereich zwischen dem Querträger und der Radaufnahme ist mindestens eine weitere, eine vierte Versteifungsrippe vorgesehen, die sich von der oberen zur unteren Tragwand erstreckt und einem Ausknicken der oberen Tragwand im Bereich zwischen dem Querträger und der Radaufnahme entgegenwirkt.

Auch hat es sich als vorteilhaft gezeigt, im Hohlraum des Tragarms im Bereich zwischen Querträger und Radaufnahme eine weitere, fünfte Versteifungsrippe vorzusehen, die sich von der oberen Tragwand bis zu einem mit einer Gewindebohrung versehenen Gussauge erstreckt. Wird die erfindungsgemäße Hinterradschwinge an einem Motorrad ohne einen zentralen Hauptständer eingesetzt, so wird bei einem solchen Motorrad zum Wechseln des Hinterrads oftmals ein im Bereich der Radaufnahme der Hinterradschwinge angreifender externer Montageständer eingesetzt. Dieser externe Montageständer kann nun beispielsweise zum Wechseln des Hinterrads oder der Antriebskette des Motorrads mit der Hinterradschwinge verschraubt werden, wobei zu diesem Zweck ein Schraubbolzen des externen Montageständers in das mit der Gewindebohrung versehene Gussauge eingeschraubt wird. Die fünfte Versteifungsrippe nun erstreckt sich von der oberen Tragwand bis zum Gussauge, welches in vorteilhafter Weise direkt an der unteren Tragwand angebunden ist.

Nach einer Weiterbildung der Erfindung ist es vorgesehen, dass sich die Versteifungsrippen im Bereich zwischen der Aufnahme und dem Querträger sowie dem Querträger und der Radaufnahme jeweils bis zur innen liegenden Tragwand erstrecken und entlang ihrer Längserstreckung Bereiche mit unterschiedlicher Breite aufweisen können.

So kann die Breite der jeweiligen Versteifungsrippe im Bereich ihres Längsverlauf vom ersten Anbindungspunkt zum zweiten Anbindungspunkt, also beispielsweise der oberen Tragwand und der unteren Tragwand einen Wendepunkt besitzen, also zunächst die Breite beispielsweise von der oberen Tragwand in Richtung zur unteren Tragwand abnehmen, um dann ab diesem Bereich geringster Breite mit dem Wendepunkt wieder zunehmen. Damit wird dem Ziel der Gewichtsersparnis der erfindungsgemäßen Hinterradschwinge Rechnung getragen.

Um nun die Torsionssteifigkeit der erfindungsgemäßen Hinterradschwinge weiter zu erhöhen, ist es vorgesehen, dass der Tragarm in dem Hohlraum im Bereich der Querträgers kreuzweise verlaufende Versteifungsrippen besitzt, die sich von der oberen zur unteren Tragwand erstrecken und bei denen ein Kreuzungsbereich der Versteifungsrippen in Richtung zu einer Längsmittenebene der Hinterradschwinge nach innen verlagert ist. Damit wird einerseits durch die kreuzweise verlaufenden Versteifungsrippen die Torsionssteifigkeit des Querträgers und damit der erfindungsgemäßen Hinterradschwinge deutlich erhöht und andererseits wird dadurch, dass der Kreuzungsbereich der Versteifungsrippen in Richtung zu der Längsmittenebene der Hinterradschwinge nach innen verlagert ist dem Ziel der Gewichtsreduzierung der Hinterradschwinge Rechnung getragen, da damit eine Anhäufung von für die Bildung der Hinterradschwinge herangezogenem Werkstoff in einem Bereich vermieden wird, der für eine weitere Erhöhung der Torsionssteifigkeit nur von geringer Bedeutung ist.

Nach einer Weiterbildung der Erfindung ist es zu einer weiteren Erhöhung der Torsionssteifigkeit der Hinterradschwinge vorgesehen, dass der Querträger eine den Hohlraum der beiden Tragarme trennende, in Längsrichtung der Hinterradschwinge verlaufende Querträgerwand besitzt, an der die kreuzweise verlaufenden Versteifungsrippen angebunden sind. Diese Querträgerwand erstreckt sich daher in Längsrichtung der Hinterradschwinge über den gesamten Querträger und verbindet die Vorderwand mit der Rückwand des Querträgers und dient als Anbindungsfläche für die kreuzweise verlaufenden Versteifungsrippen des Querträgers.

Die Querträgerwand kann sich dabei nach einer Weiterbildung der Erfindung von einer die obere Tragwand der beiden Tragarme verbindende obere Querträgerdeckwand bis zu einer die untere Tragwand der beiden Tragarme verbindende untere Querträgerdeckwand erstrecken und somit die Torsionssteifigkeit des Querträgers und damit der erfindungsgemäßen Hinterradschwinge weiter erhöhen.

An der unteren Querträgerdeckwand ist dabei nach einer Weiterbildung der Erfindung eine gabelförmige Aufnahme für ein Federdämpferelement oder einen mit dem Federdämpferelement zusammenwirkenden Hebel angeordnet, über den sich das Federdämpferelement an der Hinterradschwinge abstützt. Die vom Hinterrad des Motorrads ausgehenden Vertikalkräfte werden also über die gabelförmige Aufnahme in die erfindungsgemäße Hinterradschwinge eingeleitet.

Schließlich ist es nach einer Weiterbildung der Erfindung auch vorgesehen, dass die Hinterradschwinge aus einer Aluminiumlegierung, gefertigt ist, die aufgrund ihrer hohen Festigkeit in Kombination mit hohen Bruchdehnungen von Vorteil ist.

Die Erfindung wird im Folgenden anhand der Zeichnung näher erläutert. Diese zeigt in:
Fig. 1 eine teilweise geschnittene Draufsichtansicht von oben auf eine Ausführungsform der erfindungsgemäßen Hinterradschwinge;
Fig. 2 eine perspektivische Ansicht der Hinterradschwinge;
Fig. 3 eine Seitenansicht der Hinterradschwinge;
Fig. 4 eine Querschnittsansicht der Hinterradschwinge mit einem Schnitt quer zur Längsrichtung der Hinterradschwinge durch die beiden Tragarme; und
Fig. 5 eine Draufsicht von oben auf die Hinterradschwinge im Schnitt, wobei die Schnittebene parallel zur Zeichenebene liegt.

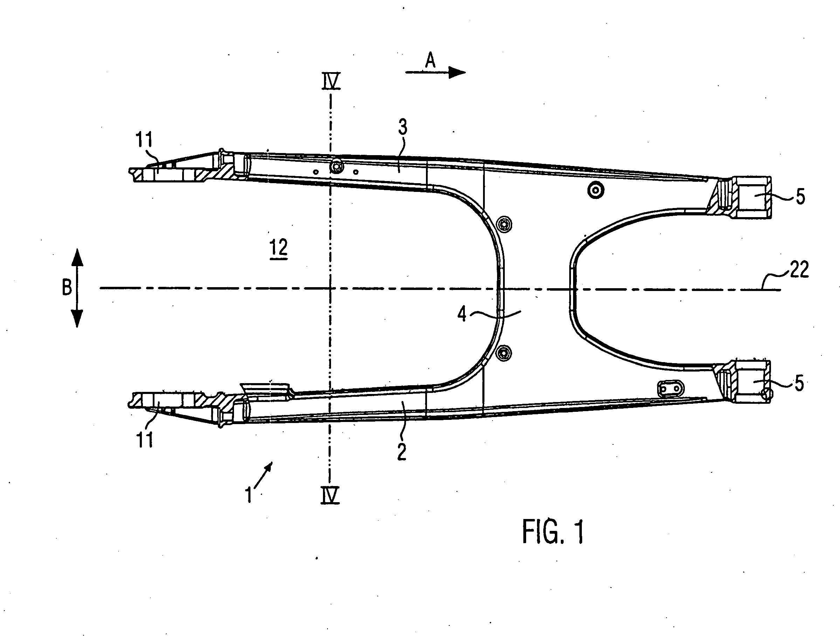

Fig. 1 zeigt eine Draufsichtansicht auf eine Ausführungsform der erfindungsgemäßen Hinterradschwinge.

Wie es ohne weiteres ersichtlich ist, ist die Hinterradschwinge 1 insgesamt H-förmig ausgebildet mit einem ersten Tragarm 2, einem zweiten Tragarm 3 und einem Querträger 4.

Die beiden Tragarme 2, 3 besitzen an ihrem in Richtung des Pfeils A jeweils vorderen Ende eine Aufnahme 5, über die die Hinterradschwinge 1 verschwenkbar an einem nicht näher dargestellten Motorradrahmen befestigt werden kann. Zu diesem Zweck können in die Aufnahmen 5 beispielsweise Lagerbuchsen oder Nadellager eingesetzt werden, die von einer Schwingenlagerachse durchsetzt werden.

Die Hinterradschwinge 1 weist in einer Richtung entgegengesetzt zum Pfeil A eine insgesamt breiter werdende Konfiguration ausgehend von den Aufnahmen 5 auf und besitzt am hinteren Ende eine Radaufnahme 11 an den beiden Tragarmen 2, 3 in der Form beispielsweise eines Langloches, in dem eine Radachse des nicht näher dargestellten Hinterrads des Motorrads um einen vorbestimmten Weg längsverschieblich angeordnet werden kann.

Wie es ohne weiteres anhand der Figuren ersichtlich ist, ist der Raum zwischen dem Querträger 4 und den Aufnahmen 5 offen ausgebildet, da der Querträger 4 der einzige Querträger der Hinterradschwinge 1 ist und zwischen den Aufnahmen 5 kein weiterer Querträger vorgesehen ist.

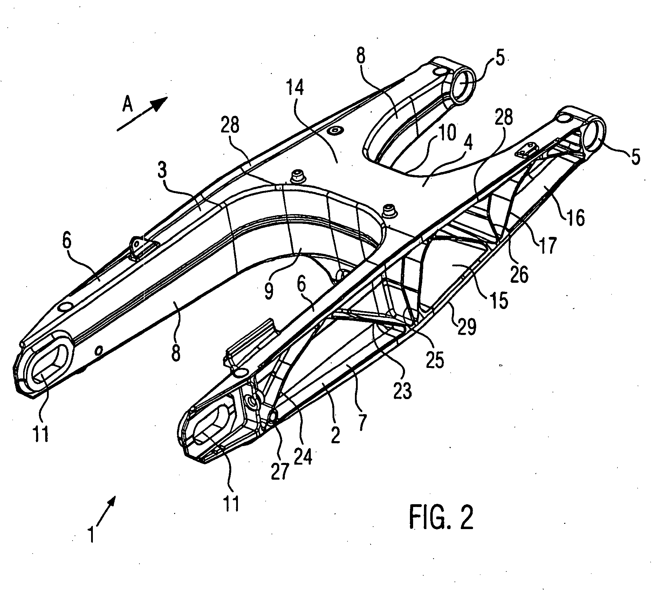

Fig. 2 der Zeichnung nun zeigt eine perspektivische Darstellung der Hinterradschwinge 1 mit den beiden Tragarmen 2, 3 und dem Querträger 4. Die beiden Tragarme 2, 3 erstrecken sich dabei in Längsrichtung der Hinterradschwinge 1 und besitzen jeweils eine obere Tragwand 6 sowie eine untere Tragwand 7. Die Tragarme 2, 3 besitzen zudem jeweils eine die jeweilige obere Tragwand 6 und untere Tragwand 7 verbindende in Längsrichtung gemäß dem Pfeil A nach Fig. 1 seitliche innen liegende Tragwand 8, die insbesondere für die Längs- oder Biegesteifigkeit der Hinterradschwinge 1 verantwortlich ist.

Die innen liegende Tragwand 8 erstreckt sich zwischen den beiden Tragarmen 2, 3 an dem den Aufnahmen 5 gegenüberliegenden Bereich des Querträgers 4 und bildet eine Rückwand 9 des Querträgers 4 aus. In ähnlicher Weise erstreckt sich die innen liegende Tragwand 8 auch zwischen den beiden Tragarmen 2, 3 entlang eines den Aufnahmen 5 zugewandten Bereichs des Querträgers 4 und bildet dort eine Vorderwand 10 des Querträgers 4 aus.

Ganz allgemein besitzt die innen liegende Tragwand 8 von der Radaufnahme 11 in Richtung des Pfeils A ausgehend eine gerade, lang gestreckte Konfiguration, die im Bereich der Rückwand 9 in eine mit einem Radius versehene Konfiguration übergeht, um dann im Bereich des jeweils anderen Tragarms 2, 3 bis zur Radaufnahme 11 wieder in eine lang gestreckte, gerade Konfiguration überzugehen.

In ähnlicher Weise geht die innen liegende Tragwand 8 im Bereich zwischen den Aufnahmen 5 und der Vorderwand 10 des Querträgers 4 von einer geradlinigen Konfiguration in eine mit einem Radius versehene gekrümmte Konfiguration über, wie dies anhand von Fig. 2 im Bereich des zweiten Tragarms 3 ersichtlich ist, um sich dann nach Bildung der Vorderwand 10 wieder in einem geschlossenen Kurvenzug bis zur Aufnahme 5 des ersten Tragarms 2 zu erstrecken.

Die obere Tragwand 6 jedes Tragarms 2, 3 und die untere Tragwand 7 jedes Tragarms 2, 3 trägt wesentlich zur Erhöhung der Seitensteifigkeit der Hinterradschwinge bei, wenn also aufgrund beispielsweise von Seitenführungskräften des im Zwischenraum 12 zwischen den beiden Tragarmen 2, 3 geführten Hinterrads eine Biegebeanspruchung in Richtung des Doppelpfeils B (siehe Fig. 1) stattfindet.

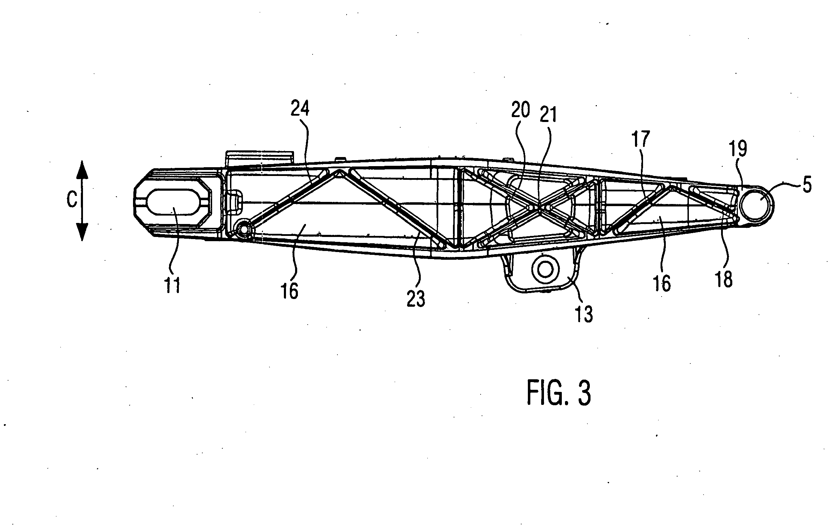

Die innen liegende Tragwand 8 jedes Tragarms 3 trägt wesentlich zur Biegesteifigkeit oder Längssteifigkeit der Hinterradschwinge 1 bei bei einer Belastung in Richtung des Doppelpfeils C (Fig. 3), wenn nämlich über die Radaufnahme 11 Vertikalkräfte in die Hinterradschwinge 1 eingeleitet werden und sich diese Kräfte über ein sich an einer gabelförmigen Aufnahme 13 abstützendes und nicht näher dargestelltes Federbein oder Federdämpferelement gegen den Motorradrahmen abstützen.

Wenn nun beispielsweise das mit der erfindungsgemäßen Hinterradschwinge ausgestattete Motorrad nach einem Sprung mit dem Hinterrad wieder auf der Fahrbahnoberfläche aufkommt, so führt dies zu einer großen Zugspannungsbelastung der innen liegenden Tragwand 8 im Bereich der unteren Tragwand 7, einem Bereich also, bei dem die eingangs geschilderte bekannte Hinterradschwinge einen Bereich mit in Höhenrichtung der Schwinge minimaler Wandstärke besitzt.

Der Querträger 4 besitzt eine die jeweilige obere Tragwand 6 des ersten Tragarmes 2 und des zweiten Tragarms 3 verbindende obere Querträgerdeckwand 14 und eine die jeweilige untere Tragwand 7 des ersten Tragarms 2 und zweiten Tragarms 3 verbindende untere Querträgerdeckwand 15 (Fig. 2).

Die obere Tragwand 6, untere Tragwand 7 und innen liegende Tragwand 8 jedes der beiden Tragarme 2 und 3 bildet zwischen sich einen Hohlraum 16 aus, der sich an jedem Tragarm 2, 3 entlang der axialen Länge zwischen der jeweiligen Aufnahme 5 und der jeweiligen Radaufnahme 11 erstreckt. In dem Hohlraum 16 befindet sich zwischen der Aufnahme 5 und dem Querträger 4 des jeweiligen Tragarms 2, 3 eine erste Versteifungsrippe 17, die sich von der oberen Tragwand 6 in Richtung zur unteren Tragwand 7 gerichtet erstreckt und zwar bei der dargestellten Ausführungsform etwa vom mittigen Bereich des zwischen der Aufnahme 5 und dem Querträger 4 gebildeten Raums des Querträgers 2, 3 in einer solchen Richtung, dass die erste Versteifungsrippe 17 in Abhängigkeit der an der Radaufnahme 11 angreifenden vertikal wirkenden Kraft auf Zug oder Druck belastet wird.

In ähnlicher Weise befindet sich in dem Raum zwischen der Aufnahme 5 und dem Querträger 4 am jeweiligen Tragarm 2, 3 eine zweite Versteifungsrippe 18 (Fig. 3) angeordnet, die sich vom Ort der Anbindung der ersten Versteifungsrippe 17 an der oberen Tragwand 6 in Richtung zur Aufnahme 5 nach vorne gerichtet erstreckt und dabei eine Anbindung an einem die Aufnahme 5 am Tragarm 2, 3 ausbildenden Gussauge 19 findet. Die erste Versteifungsrippe 17 beugt dabei einem Ausknicken der oberen Tragwand 6 im Bereich zwischen der Aufnahme 5 und dem Querträger 4 vor, die anderenfalls zu einer Bildung von Welligkeit in der oberen Tragwand 6 führen würde. In ähnlicher Weise trägt die zweite Versteifungsrippe 18 zur Erhöhung der Biegesteifigkeit oder Quersteifigkeit und Längssteifigkeit der Hinterradschwinge 1 bei und dient der Spannungsverteilung im Werkstoff im Bereich der Aufnahme 5.

Die Tragarme 2, 3 besitzen im Hohlraum 16 im Bereich des Querträgers 4 bei der dargestellten Ausführungsform zwei dritte Versteifungsrippen 20, die sich von der oberen Tragwand 6 zur unteren Tragwand 7 erstrecken und der Erhöhung der Torsionssteifigkeit des Querträgers 4 und damit der Hinterradschwinge 1 dienen. Die kreuzweise verlaufenden dritten Versteifungsrippen 20 besitzen einen Kreuzungsbereich 21, der in Richtung einer Längsmittenebene 22 (Fig. 1) der Hinterradschwinge 1 nach innen verlagert ist. Durch diese kreuzweise verlaufenden dritten Versteifungsrippen 20 wird die Torsionssteifigkeit des Querträgers deutlich erhöht und dadurch, dass der Kreuzungsbereich 21 der Versteifungsrippen 20 in Richtung zu der Längsmittenebene 22 der Hinterradschwinge 1 in Richtung nach innen gerichtet verlagert wird, wird aufgrund der Werkstoffersparnis auch dem Ziel der Gewichtsreduzierung der Hinterradschwinge 1 Rechnung getragen.

Die Tragarme 2, 3 besitzen im Bereich zwischen dem Querträger 4 und der Radaufnahme 11 in dem Hohlraum 16 bei der dargestellten Ausführungsform eine vierte Versteifungsrippe 23 und eine fünfte Versteifungsrippe 24. Die vierte Versteifungsrippe 23 läuft dabei von der oberen Tragwand 6 in Richtung zur unteren Tragwand 7 in einem schrägen Winkel und findet an der unteren Tragwand 7 eine Anbindungsfläche im Bereich einer der dritten Versteifungsrippen 20 und einer weiteren, vertikal von oben nach unten verlaufenden sechsten Versteifungsrippe 25. In ähnlicher Weise befindet sich zwischen der ersten Versteifungsrippe 17 und einer der beiden kreuzweise verlaufenden dritten Versteifungsrippen 20 eine weitere, siebte Versteifungsrippe 26 zwischen der oberen Tragwand 6 und der unteren Tragwand 7 angeordnet, die ähnlich wie die sechste Versteifungsrippe 25 vertikal von oben nach unten verläuft.

Die fünfte Versteifungsrippe 24 erstreckt sich dabei von der oberen Tragwand 6 vom Bereich der Anbindung der vierten Versteifungsrippe 23 an der oberen Tragwand 6 in Richtung nach unten gerichtet in einem Winkel zur unteren Tragwand 7 und zwar bis in den Bereich eines Gussauges 27, welches eine Gewindebohrung mit einem Innengewinde aufweist, an dem ein nicht näher dargestellter Montageständer über einen Schraubbolzen lösbar befestigt werden kann, der beispielsweise dann zum Einsatz kommt, wenn das Hinterrad des Motorrads gewechselt werden soll und das Motorrad keinen zentralen Hauptständer besitzt.

Wie es ohne weiteres anhand von Fig. 2 ersichtlich ist, verändert sich die Breite der jeweiligen Versteifungsrippen im Bereich ihres Längsverlaufs vom ersten Anbindungspunkt zum zweiten Anbindungspunkt, also beispielsweise der oberen Tragwand 6 und der unteren Tragwand 7 derart, dass die Breite zunächst von der oberen Tragwand 6 in Richtung zur unteren Tragwand 7 abnimmt und ab einem Bereich geringster Breite dann zur unteren Tragwand 7 hin wieder zunimmt. Damit wird dem Ziel der Gewichtsersparnis der erfindungsgemäßen Hinterradschwinge Rechnung getragen.

Wie es anhand von Fig. 2 und Fig. 3 der Zeichnung ersichtlich ist, besitzen beide Tragarme 2, 3 an der jeweiligen oberen Tragwand 6 im außen liegenden Bereich, d.h. also beabstandet zur Längsmittenebene 22 eine erste längs verlaufende Versteifungsrippe 28 und an der unteren Tragwand 7 eine zweite längs verlaufende Versteifungsrippe 29. Während die oberen und unteren Tragwände 6, 7 einem seitlichen Ausknicken des von der innen liegenden Tragwand 8 gebildeten Zentralträgers entgegenwirken, beugen die jeweils längs verlaufenden Versteifungsrippen 28, 29 einem seitlichen Ausknicken der oberen und unteren Tragwand 6, 7 vor und dienen der Vermeidung von Spannungsspitzen.

Fig. 2 zeigt dabei, dass die längs verlaufenden Versteifungsrippen 28, 29 entlang der Richtung des Pfeils A eine variable Höhe besitzen, bei der dargestellten Ausführungsform also von der Radaufnahme 11 ausgehend die Höhe der längs verlaufenden Versteifungsrippen 28, 29 zunächst kontinuierlich zunimmt, um dann in Richtung der Aufnahme 5 wieder langsam abzunehmen. Die Versteifungsrippen 28 und 29 verlaufen daher jeweils außerhalb des von den Tragwänden 6, 7, 8 gebildeten Hohlraums 16 des Tragarms 2, 3 und tragen zur Erhöhung der Seitensteifigkeit der Hinterradschwinge 1 bei und verhindern ein seitliches Ausknicken der oberen und unteren Tragwand 6, 7 des jeweiligen Tragarms 2, 3.

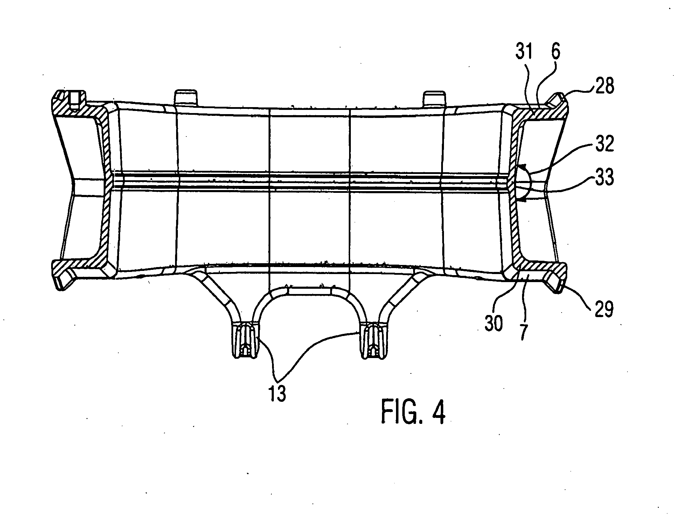

Nachfolgend wird nun auf Fig. 4 der Zeichnung Bezug genommen. Diese zeigt eine Ansicht in Richtung des Pfeils A nach Fig. 1 und zwar auf eine Schnittebene IV-IV nach Fig. 1.

An der gabelförmigen Aufnahme 13 kann ein nicht näher dargestelltes Federbein des Motorrads angelenkt werden. Die innen liegende Tragwand 8 des rechten Tragarms 2 ist jeweils einstückig mit der oberen Tragwand 6 und der unteren Tragwand 7 verbunden. Der Tragarm 2 weist dabei in einem unteren Übergangsbereich 30 zwischen der unteren Tragwand 7 und der innen liegenden Tragwand 8 und in einem oberen Übergangsbereich 31 zwischen der oberen Tragwand 6 und der innen liegenden Tragwand 8 jeweils eine Wandstärke auf, die größer ist als in den Bereichen der Tragwände 6, 7, 8 benachbart zu den Übergangsbereichen 30 und 31.

Damit wird der Eigenschaft der Schwinge Rechnung getragen, dass sich in dem Übergangsbereich 30 und 31 Spannungen aus einer Biegebelastung der Hinterradschwinge 1 aufgrund von Vertikalkräften und einer Biegebelastung der Hinterradschwinge 1 aufgrund von Seitenkräften überlagern können und damit einer erhöhten Spannungskonzentration im jeweiligen Übergangsbereich 30, 31 entgegengewirkt wird. Ausgehend vom jeweiligen Übergangsbereich 30 und 31 nimmt die Wandstärke der oberen Tragwand 6 und die Wandstärke der unteren Tragwand 7 in Richtung zur ersten längs verlaufenden Versteifungsrippe 28 und der zweiten längs verlaufenden Versteifungsrippe 29 nach außen jeweils ab, um einer Gewichtsreduzierung der Hinterradschwinge 1 Rechnung tragen zu können.

Die innen liegende Tragwand 8 weist eine satteldachförmige Konfiguration auf mit einem Innenwinkel 32, der bei der dargestellten Ausführungsform 174 Grad beträgt, der sich hinsichtlich der werkzeugtechnischen Gestaltung als vorteilhaft erwiesen hat.

Wie es ohne weiteres ersichtlich ist, nimmt die Wandstärke der innen liegenden Tragwand 8 von einer neutralen Faser im Bereich der Satteldachmitte 33 sowohl in Richtung zur oberen Tragwand 6 als auch in Richtung zur unteren Tragwand 7 linear zu, um dem Lastkollektiv und einer ausgewogenen Spannungsverteilung im jeweiligen Tragarm 2, 3 gerecht zu werden. Die längs verlaufenden Versteifungsrippen 28, 29 weisen eine im Querschnitt etwa dreiecksförmige Konfiguration auf und dienen dazu, einem seitlichen Ausknicken der oberen Tragwand 6 und der unteren Tragwand 7 vorzubeugen.

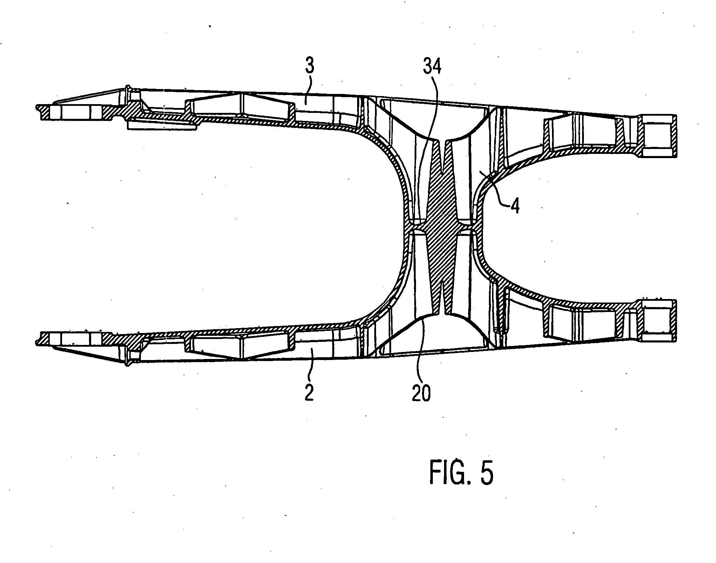

Fig. 5 nun zeigt noch eine Schnittdarstellung durch die Hinterradschwinge 1. Zwischen dem ersten Tragarm 2 und dem zweiten Tragarm 3 erstreckt sich der Querträger 4, der der Zunahme der Torsionssteifigkeit der Hinterradschwinge 1 dient. Um nun die Torsionssteifigkeit der Schwinge 1 weiter zu erhöhen, sind im Bereich des Hohlraums 16 im Bereich des Querträgers 4 die kreuzweise verlaufenden dritten Versteifungsrippen 20 vorgesehen, die sich in dem Bereich der Längsmittenebene 22 der Schwinge 1 zu einer Querträgerwand 34 verbinden, die sich von der oberen Querträgerdeckwand 14 bis zur unteren Querträgerdeckwand 15 erstreckt und die Torsionssteifigkeit des Querträgers 4 und damit der Hinterradschwinge 1 erhöht.

Damit schafft die Erfindung eine mittels eines Druckgießverfahrens einstückig herstellbare Hinterradschwinge für ein Motorrad, die hohe Steifigkeitswerte, und zwar sowohl in Längsrichtung, als auch in Querrichtung und zur Aufnahme von Torsionskräften besitzt und darüber hinaus mit einem Eigengewicht von etwa 4.1 Kilogramm eine niedrige Masse aufweist.

Hinsichtlich vorstehend im Einzelnen nicht näher erläuterter Merkmale der Erfindung wird im Übrigen ausdrücklich auf die Ansprüche und die Zeichnung verwiesen.

### Bezugszeichenliste

- 1: Hinterradschwinge
- 2: Erster Tragarm
- 3: Zweiter Tragarm
- 4: Querträger
- 5: Aufnahme
- 6: Obere Tragwand
- 7: Untere Tragwand
- 8: Innen liegende Tragwand
- 9: Rückwand
- 10: Vorderwand
- 11: Radaufnahme
- 12: Zwischenraum
- 13: Gabelförmige Aufnahme
- 14: Obere Querträgerdeckwand
- 15: Untere Querträgerdeckwand
- 16: Hohlraum
- 17: Erste Versteifungsrippe
- 18: Zweite Versteifungsrippe
- 19: Gussauge
- 20: Dritte Versteifungsrippe
- 21: Kreuzungsbereich
- 22: Längsmittenebene
- 23: Vierte Versteifungsrippe
- 24: Fünfte Versteifungsrippe
- 25: Sechste Versteifungsrippe
- 26: Siebte Versteifungsrippe
- 27: Gussauge
- 28: Erste längs verlaufende Versteifungsrippe
- 29: Zweite längs verlaufende Versteifungsrippe
- 30: Unterer Übergangsbereich
- 31: Oberer Übergangsbereich
- 32: Innenwinkel
- 33: Satteldachmitte
- 34: Querträgerwand
- A: Pfeil
- B: Doppelpfeil
- C: Doppelpfeil

## Patentansprüche

1. Hinterradschwinge (1) für ein Motorrad, mit zwei sich in Längsrichtung erstreckenden Tragarmen (2, 3) mit jeweils drei Tragwänden (6, 7, 8) und einem in Querrichtung verlaufenden und die Tragarme (2, 3) verbindenden Querträger (4), wobei die Tragarme (2, 3) jeweils eine Aufnahme (5) zur verschwenkbaren Anordnung der Hinterradschwinge (1) an einem Motorradrahmen und im Bereich des den Aufnahmen (5) gegenüberliegenden Endes der Tragarme eine Radaufnahme (11) für ein Hinterrad des Motorrads aufweisen, und die Tragarme (2, 3) in einem Schnitt quer zur Längsrichtung der Hinterradschwinge (1) jeweils eine obere Tragwand (6) sowie eine untere Tragwand (7) und eine die obere (6) und die untere Tragwand (7) verbindende und in Längsrichtung der Hinterradschwinge (1) innen liegende Tragwand (8) mit einem zwischen den Tragwänden gebildeten und nach außen offenen Hohlraum (16) aufweisen, **dadurch gekennzeichnet, dass** der Bereich zwischen dem Querträger (4) und den Aufnahmen (5) offen ausgebildet ist und die Hinterradschwinge (1) mittels Druckgießens einstückig gefertigt ist.

2. Hinterradschwinge nach Anspruch 1, **dadurch gekennzeichnet, dass** die Tragarme im Querschnitt C-förmig ausgebildet sind.

3. Hinterradschwinge nach Anspruch 1 oder 2, **dadurch gekennzeichnet, dass** die innen liegende Tragwand (8) jeweils eine satteldachförmige Konfiguration aufweist mit einem Innenwinkel (32) im Bereich von etwa 160 Grad bis etwa 180 Grad.

4. Hinterradschwinge nach einem der vorstehenden Ansprüche, **dadurch gekennzeichnet, dass** die Wandstärke der innen liegenden Tragwand (8) jeweils von einer Wandstärke weitgehend im Bereich der Längsmitte (33) der innen liegenden Tragwand (8) aus in Richtung zur oberen (6) und unteren Tragwand (7) ansteigt.

5. Hinterradschwinge nach einem der vorstehenden Ansprüche, **dadurch gekennzeichnet, dass** die Tragarme (2, 3) im Übergangsbereich (30, 31) zwischen der innen liegenden Tragwand (8) und der oberen (6) sowie der unteren Tragwand (7) eine Wandstärke besitzen, die größer ist als in den Bereichen der Tragwände (6, 7, 8) benachbart zum Übergangsbereich.

6. Hinterradschwinge nach einem der vorstehenden Ansprüche, **dadurch gekennzeichnet, dass** die Wandstärke der oberen (6) und unteren Tragwand (7) jeweils von einem zu einem Übergangsbereich (30, 31) zwischen der oberen (6) und unteren Tragwand (7) und der innen liegenden Tragwand (8) benachbarten Bereich zum in Längsrichtung der Hinterradschwinge (1) außen liegenden Bereich der oberen (6) und unteren Tragwand (7) abnimmt.

7. Hinterradschwinge nach einem der vorstehenden Ansprüche, **dadurch gekennzeichnet, dass** die obere (6) und die untere Tragwand (7) jeweils eine Versteifungsrippe (28, 29) besitzt, die sich weitgehend vom Bereich der Aufnahme (5) bis weitgehend zum Bereich der Radaufnahme (11) erstreckt.

8. Hinterradschwinge nach Anspruch 7, **dadurch gekennzeichnet, dass** die Versteifungsrippe (28, 29) jeweils an dem der innen liegenden Tragwand (8) gegenüberliegenden Bereich der oberen (6) und der unteren Tragwand (7) außerhalb des Hohlraums (16) angeordnet ist und entlang ihrer Längserstreckung einen Bereich zunehmender und einen Bereich abnehmender Höhe besitzt.

9. Hinterradschwinge nach einem der vorstehenden Ansprüche, **dadurch gekennzeichnet, dass** sich die innen liegende Tragwand (8) jeweils zwischen den beiden Tragarmen (2, 3) entlang eines den Aufnahmen (5) zugewandten Bereichs des Querträgers (4) erstreckt und eine Vorderwand (10) des Querträgers (4) ausbildet.

10. Hinterradschwinge nach einem der vorstehenden Ansprüche, **dadurch gekennzeichnet, dass** sich die innen liegende Tragwand (8) jeweils zwischen den beiden Tragarmen (2, 3) entlang eines den Aufnahmen (5) gegenüberliegenden Bereichs des Querträgers (4) erstreckt und eine Rückwand (9) des Querträgers (4) ausbildet.

11. Hinterradschwinge nach einem der vorstehenden Ansprüche, **dadurch gekennzeichnet, dass** die Tragarme (2, 3) jeweils in dem Hohlraum (16) zwischen der Aufnahme (5) und dem Querträger (4) mindestens eine erste Versteifungsrippe (17) besitzen, die sich von der oberen Tragwand (6) zur unteren Tragwand (7) erstreckt.

12. Hinterradschwinge nach einem der vorstehenden Ansprüche, **dadurch gekennzeichnet, dass** die Tragarme (2, 3) jeweils in dem Hohlraum (16) zwischen der Aufnahme (5) und dem Querträger (4) mindestens eine zweite Versteifungsrippe (18) besitzen, die sich von der oberen Tragwand (6) bis zur Aufnahme (5) erstreckt.

13. Hinterradschwinge nach einem der vorstehenden Ansprüche, **dadurch gekennzeichnet, dass** die Tragarme (2, 3) jeweils in dem Hohlraum (16) im Bereich des Querträgers (4) mindestens eine dritte Versteifungsrippe (20) besitzen, die sich von der oberen Tragwand (6) zur unteren Tragwand (7) erstreckt.

14. Hinterradschwinge nach einem der vorstehenden Ansprüche, **dadurch gekennzeichnet, dass** die Tragarme (2, 3) jeweils in dem Hohlraum (16) im Bereich zwischen Querträger (4) und Radaufnahme (11) mindestens eine vierte Versteifungsrippe (23) besitzen, die sich von der oberen (6) zur unteren Tragwand (7) erstreckt.

15. Hinterradschwinge nach einem der vorstehenden Ansprüche, **dadurch gekennzeichnet, dass** die Tragarme (2, 3) jeweils in dem Hohlraum (16) im Bereich zwischen Querträger (4) und Radaufnahme (11) mindestens eine fünfte Versteifungsrippe (24) besitzen, die sich von der oberen Tragwand (6) bis zu einem mit einer Gewindebohrung versehenen Gussauge (27) erstreckt.

16. Hinterradschwinge nach einem der Ansprüche 11 bis 15, **dadurch gekennzeichnet, dass** sich die Versteifungsrippen (17, 18, 20, 23, 24) im Bereich zwischen Aufnahme (5) und Querträger (4) sowie Querträger (4) und Radaufnahme (11) jeweils bis zur innen liegenden Tragwand (8) erstrecken und entlang ihrer Längserstreckung mit Bereichen unterschiedlicher Breite ausgebildet sind.

17. Hinterradschwinge nach einem der vorstehenden Ansprüche, **dadurch gekennzeichnet, dass** die Tragarme (2, 3) jeweils in dem Hohlraum (16) im Bereich des Querträgers (4) kreuzweise verlaufende Versteifungsrippen (20) besitzen, die sich von der oberen (6) zur unteren Tragwand (7) erstrecken und ein Kreuzungsbereich (21) der Versteifungsrippen in Richtung zu einer Längsmittenebene (22) der Hinterradschwinge (1) nach innen verlagert ist.

18. Hinterradschwinge nach Anspruch 17, **dadurch gekennzeichnet, dass** der Querträger (4) eine den Hohlraum (16) der beiden Tragarme (2, 3) trennende, in Längsrichtung der Hinterradschwinge (1) verlaufende Querträgerwand (34) besitzt, an der die kreuzweise verlaufenden Versteifungsrippen (20) angebunden sind.

19. Hinterradschwinge nach Anspruch 18, **dadurch gekennzeichnet, dass** der Querträger (4) eine die obere Tragwand (6) der beiden Tragarme (2, 3) verbindende obere Querträgerdeckwand (14) und eine die untere Tragwand (7) der beiden Tragarme (2, 3) verbindende untere Querträgerdeckwand (15) besitzt und sich die Querträgerwand (34) von der oberen (14) zur unteren Querträgerdeckwand (15) erstreckt.

20. Hinterradschwinge nach Anspruch 19, **dadurch gekennzeichnet, dass** an der unteren Querträgerdeckwand (15) eine gabelförmige Aufnahme (13) für ein Federdämpferelement oder einen mit dem Federdämpferelement zusammen wirkenden Hebel angeordnet ist.

21. Hinterradschwinge nach einem der vorstehenden Ansprüche, **dadurch gekennzeichnet, dass** die Hinterradschwinge (1) aus einer Aluminiumlegierung gebildet ist.

## Claims

1. Rear swingarm (1) for a motorcycle, with two support arms (2, 3) extending in the longitudinal direction and each having three support walls (6, 7, 8) and a cross member (4) running in the transverse direction and connecting the support arms (2, 3), wherein the support arms (2, 3) each have a mount (5) for the pivotable arrangement of the rear swingarm (1) on a motorcycle frame and a wheel mount (11) for a rear wheel of the motorcycle in the region of the end of the support arms opposite the mounts (5), and the support arms (2, 3) each have, in a section transverse to the longitudinal direction of the rear swingarm (1), an upper support wall (6) and a lower support wall (7) and a support wall (8) which connects the upper (6) and the lower support wall (7) and lies on the inside in the longitudinal direction of the rear swingarm (1) with a cavity (16) formed between the support walls and open to the outside, **characterised in that** the region between the cross member (4) and the mounts (5) has an open configuration and the rear swingarm (1) is produced in one piece by die casting.

2. Rear swingarm according to Claim 1, **characterised in that** the support arms have a C-shaped cross section.

3. Rear swingarm according to Claim 1 or 2, **characterised in that** the inner support wall (8) in each case has a gabled-roof-shaped configuration with an internal angle (32) in the range from approximately 160 degrees to approximately 180 degrees.

4. Rear swingarm according to one of the preceding claims, **characterised in that** the wall thickness of the inner support wall (8) in each case increases from a wall thickness largely in the region of the longitudinal centre (33) of the inner support wall (8) towards the upper (6) and lower support walls (7).

5. Rear swingarm according to one of the preceding claims, **characterised in that** the support arms (2, 3) have a wall thickness in the transition region (30, 31) between the inner support wall (8) and the upper (6) and lower support walls (7) which is greater than in the regions of the support walls (6, 7, 8) adjacent to the transition region.

6. Rear swingarm according to one of the preceding claims, **characterised in that** the wall thickness of the upper (6) and lower support walls (7) in each case decreases from a region adjacent to a transition region (30, 31) between the upper (6) and lower support walls (7) and the inner support wall (8) towards the region of the upper (6) and lower support walls (7) which lies on the outside in the longitudinal direction of the rear swingarm (1).

7. Rear swingarm according to one of the preceding claims, **characterised in that** the upper (6) and lower support walls (7) each have a reinforcing rib (28, 29), which extends largely from the region of the mount (5) largely to the region of the wheel mount (11).

8. Rear swingarm according to Claim 7, **characterised in that** the reinforcing rib (28, 29) in each case is arranged on the region of the upper (6) and lower support walls (7) opposite the inner support wall (8) outside the cavity (16) and has a region of increasing height and a region of decreasing height along its longitudinal extent.

9. Rear swingarm according to one of the preceding claims, **characterised in that** the inner support wall (8) in each case extends between the two support arms (2, 3) along a region of the cross member (4) facing the mounts (5) and forms a front wall (10) of the cross member (4).

10. Rear swingarm according to one of the preceding claims, **characterised in that** the inner support wall (8) in each case extends between the two support arms (2, 3) along a region of the cross member (4) opposite the mounts (5) and forms a rear wall (9) of the cross member (4).

11. Rear swingarm according to one of the preceding claims, **characterised in that** the support arms (2, 3) each have at least one first reinforcing rib (17) in the cavity (16) between the mount (5) and the cross member (4), which reinforcing rib extends from the upper support wall (6) to the lower support wall (7).

12. Rear swingarm according to one of the preceding claims, **characterised in that** the support arms (2, 3) each have at least one second reinforcing rib (18) in the cavity (16) between the mount (5) and the cross member (4), which reinforcing rib extends from the upper support wall (6) to the mount (5).

13. Rear swingarm according to one of the preceding claims, **characterised in that** the support arms (2, 3) each have at least one third reinforcing rib (20) in the cavity (16) in the region of the cross member (4), which reinforcing rib extends from the upper support wall (6) to the lower support wall (7).

14. Rear swingarm according to one of the preceding claims, **characterised in that** the support arms (2, 3) each have at least one fourth reinforcing rib (23) in the cavity (16) in the region between the cross member (4) and the wheel mount (11), which reinforcing rib extends from the upper (6) to the lower support wall (7).

15. Rear swingarm according to one of the preceding claims, **characterised in that** the support arms (2, 3) each have at least one fifth reinforcing rib (24) in the cavity (16) in the region between the cross member (4) and the wheel mount (11), which reinforcing rib extends from the upper support wall (6) to a cast eye (27) provided with a threaded bore.

16. Rear swingarm according to one of Claims 11 to 15, **characterised in that** the reinforcing ribs (17, 18, 20, 23, 24) in the region between the mount (5) and the cross member (4) and between the cross member (4) and the wheel mount (11) each extend as far as the inner support wall (8) and are configured with regions of different width along their longitudinal extent.

17. Rear swingarm according to one of the preceding claims, **characterised in that** the support arms (2, 3) each have reinforcing ribs (20) running crossways in the cavity (16) in the region of the cross member (4), which extend from the upper (6) to the lower support wall (7), and a crossing region (21) of the reinforcing ribs is shifted inwards towards a longitudinal centre plane (22) of the rear swingarm (1).

18. Rear swingarm according to Claim 17, **characterised in that** the cross member (4) has a cross member wall (34) which divides the cavity (16) of the two support arms (2, 3) and runs in the longitudinal direction of the rear swingarm (1), to which cross member wall the crossways reinforcing ribs (20) are joined.

19. Rear swingarm according to Claim 18, **characterised in that** the cross member (4) has an upper cross member covering wall (14) which connects the upper support wall (6) of the two support arms (2, 3) and a lower cross member covering wall (15) which connects the lower support wall (7) of the two support arms (2, 3), and the cross member wall (34) extends from the upper (14) to the lower cross member covering wall (15).

20. Rear swingarm according to Claim 19, **characterised in that** a fork-shaped mount (13) for a spring damper element or a lever which interacts with the spring damper element is arranged on the lower cross member covering wall (15).

21. Rear swingarm according to one of the preceding claims, **characterised in that** the rear swingarm (1) is formed from an aluminium alloy.

## Revendications

1. Bras oscillant de roue arrière (1) pour une moto, comprenant deux bras porteurs (2, 3) s'étendant dans le sens longitudinal avec respectivement trois parois porteuses (6, 7, 8) et une traverse (4) s'étendant dans le sens transversal et reliant les bras porteurs (2, 3), les bras porteurs (2, 3) présentant chacun un logement (5) pour l'agencement basculant du bras oscillant de fourche arrière (1) sur un cadre de moto et dans la zone de l'extrémité, faisant face au logement (5), des bras porteurs un logement de roue (11) pour une roue arrière de la moto, et les bras porteurs (2, 3) comprenant chacun dans une coupe transversalement au sens longitudinal du bras oscillant de fourche arrière (1) une paroi porteuse (6) supérieure et une paroi porteuse (7) inférieure et une paroi porteuse (8) reliant la paroi porteuse (6) supérieure et la paroi porteuse (7) inférieure et intérieure dans le sens longitudinal du bras oscillant de fourche arrière (1) avec une cavité (16) formée entre les parois porteuses et ouverte vers l'extérieur, **caractérisé en ce que** la zone entre la traverse (4) et les logements (5) est conçue ouverte et le bras oscillant de fourche arrière (1) est fabriqué d'une seul pièce par moulage sous pression.

2. Bras oscillant de fourche arrière selon la revendication 1, **caractérisé en ce que** les bras porteurs sont conçus en section en forme de C.

3. Bras oscillant de fourche arrière selon la revendication 1 ou 2, **caractérisé en ce que** la paroi porteuse (8) intérieure présente respectivement une configuration en forme de toit en selle avec un angle intérieur (32) dans la plage d'environ 160 degrés à environ 180 degrés.

4. Bras oscillant de fourche arrière selon l'une quelconque des revendications précédentes, **caractérisé en ce que** l'épaisseur de paroi de la paroi porteuse (8) intérieure augmente respectivement à partir d'une épaisseur de paroi largement dans la zone du centre longitudinal (33) de la paroi porteuse (8) intérieure en direction de la paroi porteuse (6) supérieure et de la paroi porteuse (7) inférieure.

5. Bras oscillant de roue arrière selon l'une quelconque des revendications précédentes, **caractérisé en ce que** les bras porteurs (2, 3) présentent dans la zone de transition (30, 31) entre la paroi porteuse (8) intérieure et la paroi porteuse (6) supérieure et la paroi porteuse (7) inférieure une épaisseur de paroi qui est plus grande que dans les zones des parois porteuses (6, 7, 8) à proximité de la zone de transition.

6. Bras oscillant de roue arrière selon l'une quelconque des revendications précédentes, **caractérisé en ce que** l'épaisseur de paroi de la paroi porteuse (6) supérieure et de la paroi porteuse (7) inférieure diminue à chaque fois depuis une zone voisine d'une zone de transition (30, 31) entre la paroi porteuse (6) supérieure et la paroi porteuse (7) inférieure et la paroi porteuse (8) intérieure en direction de la zone, située à l'extérieur dans le sens longitudinal du bras oscillant de fourche arrière (1), de la paroi porteuse (6) supérieure et la paroi porteuse (7) inférieure.

7. Bras oscillant de fourche arrière selon l'une quelconque des revendications précédentes, **caractérisé en ce que** la paroi porteuse (6) supérieure et la paroi porteuse (7) inférieure présentent chacune une nervure de renfort (28, 29), qui s'étend largement depuis la zone du logement (5) jusqu'à largement la zone du logement de roue (11),

8. Bras oscillant de fourche arrière selon la revendication 7, **caractérisé en ce que** la nervure de renfort (28, 29) est disposée à chaque fois sur la zone, opposée à la paroi porteuse (8) intérieure, de la paroi porteuse (6) supérieure et de la paroi porteuse (7) inférieure en dehors de la cavité (16) et présente le long de son extension longitudinale une zone de hauteur croissante et une zone de hauteur décroissante.

9. Bras oscillant de fourche arrière selon l'une quelconque des revendications précédentes, **caractérisé en ce que** la paroi porteuse (8) intérieure s'étend respectivement entre les deux bras porteurs (2, 3) le long d'une zone, tournée vers les logements (5), de la traverse (4) et forme une paroi avant (10) de la traverse (4).

10. Bras oscillant de fourche arrière selon l'une quelconque des revendications précédentes, **caractérisé en ce que** la paroi porteuse (8) intérieure s'étend respectivement entre les deux bras porteurs (2, 3) le long d'une zone, opposée aux logements (5), de la traverse (4) et forme une paroi arrière (9) de la traverse (4).

11. Bras oscillant de fourche arrière selon l'une quelconque des revendications précédentes, **caractérisé en ce que** les bras porteurs (2, 3) comprennent chacun dans la cavité (16) entre le logement (5) et la traverse (4) au moins une première nervure de renfort (17) qui s'étend depuis la paroi porteuse (6) supérieure vers la paroi porteuse (7) inférieure.

12. Bras oscillant de fourche arrière selon l'une quelconque des revendications précédentes, **caractérisé en ce que** les bras porteurs (2, 3) présentent chacun dans la cavité (16) entre le logement (5) et la traverse (4) au moins une seconde nervure de renfort (18) qui s'étend depuis la paroi porteuse (6) supérieure jusqu'au logement (5).

13. Bras oscillant de fourche arrière selon l'une quelconque des revendications précédentes, **caractérisé en ce que** les bras porteurs (2, 3) présentent chacun dans la cavité (16) dans la zone de la traverse (4) au moins une troisième nervure de renfort (20) qui s'étend depuis la paroi porteuse (6) supérieure vers la paroi porteuse (7) inférieure.

14. Bras oscillant de fourche arrière selon l'une quelconque des revendications précédentes, **caractérisé en ce que** les bras porteurs (2, 3) présentent chacun dans la cavité (16) dans la zone entre la traverse (4) et le logement de roue (11) au moins une quatrième nervure de renfort (23) qui s'étend depuis la paroi porteuse (6) vers la paroi porteuse (7) inférieure.

15. Bras oscillant de fourche arrière selon l'une quelconque des revendications précédentes, **caractérisé en ce que** les bras porteurs (2, 3) présentent chacun dans la cavité (16) dans la zone entre la traverse (4) et le logement de roue (11) au moins une cinquième nervure de renfort (24) qui s'étend depuis la paroi porteuse (6) supérieure jusqu'à un bossage moulé (27) doté d'un alésage fileté.

16. Bras oscillant de fourche arrière selon l'une quelconque des revendications 11 à 15, **caractérisé en ce que** les nervures de renfort (17, 18, 20, 23, 24) s'étendent dans la zone entre le logement (5) et la traverse (4) ainsi que la traverse (4) et le logement de roue (11) respectivement jusqu'à la paroi porteuse (8) intérieure et sont conçues le long de leur étirement longitudinal avec des zones de largeur différente.

17. Bras oscillant de fourche arrière selon l'une quelconque des revendications précédentes, **caractérisé en ce que** les bras porteurs (2, 3) présentent respectivement dans la cavité (16) dans la zone de la traverse (4) des nervures de renfort (20) agencées de façon croisée qui s'étendent depuis la paroi porteuse (6) supérieure vers la paroi porteuse (7) inférieure et une zone de croisement (21) des nervures de renfort est déplacée en direction d'un plan médian longitudinal (22) du bras oscillant de fourche arrière (1) vers l'intérieur.

18. Bras oscillant de fourche arrière selon la revendication 17, **caractérisé en ce que** la traverse (4) présente une paroi de traverse (34) séparant la cavité (16) des deux bras porteurs (2, 3) et agencée dans le sens longitudinal du bras oscillant de fourche arrière (1), paroi à laquelle les nervures de renfort (20) agencées en croix sont rattachées.

19. Bras oscillant de fourche arrière selon la revendication 18, **caractérisé en ce que** la traverse (4) présente une paroi de recouvrement de traverse (14) supérieure reliant la paroi porteuse (6) supérieure des deux bras porteurs (2, 3) et une paroi de recouvrement de traverse (15) inférieure reliant la paroi porteuse (7) inférieure des deux bras porteurs (2, 3) et la paroi de traverse (34) s'étend depuis la paroi de recouvrement de traverse (14) supérieure vers la paroi de recouvrement de traverse (15) inférieure.

20. Bras oscillant de fourche arrière selon la revendication 19, **caractérisé en ce qu'**un logement (13) en forme de fourche pour un élément amortisseur à ressort ou un levier coopérant avec l'élément amortisseur à ressort est disposé sur la paroi de recouvrement de traverse (15) inférieure.

21. Bras oscillant de fourche arrière selon l'une quelconque des revendications précédentes, **caractérisé en ce que** le bras oscillant de fourche arrière (1) est formé dans un alliage d'aluminium.
